# EUROPÄISCHE PATENTSCHRIFT

(11) **EP 0 700 762 B1**
(45) Veröffentlichungstag und Bekanntmachung des Hinweises auf die Patenterteilung: **03.05.2000**
(21) Anmeldenummer: 95112279.5
(22) Anmeldetag: 04.08.1995
(51) Int. Cl.: B27N 3/00

(54) **Verfahren zur Herstellung von Holzspan- und Faserplatten**
Process for the fabrication of chipboards and fibreboards
Procédé pour la fabrication de panneaux en particules de bois et en fibres de bois

(30) Priorität: 09.08.1994 DE 4428119
(43) Veröffentlichungstag der Anmeldung: 13.03.1996
(73) Patentinhaber: Roffael, Edmone, Prof., 38104 Braunschweig (DE)
(72) Erfinder: Roffael, Edmone, Prof., 38104 Braunschweig (DE)
(74) Vertreter: Heusler, Wolfgang, Dipl.-Ing.

(56) Entgegenhaltungen:
- DE-A- 2 317 884
- DE-A- 3 123 999
- DE-A- 4 224 629

## Beschreibung

Für die Herstellung von Holzspan- bzw. Faserplatten werden üblicherweise Holzspäne bzw. Holzfasern mit einem Bindemittel beleimt, anschließend zu Spanmaten bzw. Fasermaten gestreut und darauffolgend unter Wärme und Druck zu Spanplatten bzw. Faserplatten verpreßt. Die Span- bzw. Faserplatten können ggf. nach dem Pressen heiß gestapelt werden.

Als Bindemittel für die Herstellung von Span- bzw. Faserplatten können neben den säurehärtenden Harnstofformaldehydharzen, alkalisch härtenden Phenolformaldehydharzen und Klebstoffen auf Basis von Diisocyanaten auch Extrakte bestimmter Rinden- und Holzarten, die unter dem Sammelbegriff "Tannine" zusammengefaßt sind, eingesetzt werden. Für die Herstellung von Span- und Faserplatten sind unter den Tanninen die sogenannten kondensierten Tannine besonders geeignet.

Für die Herstellung von Holzspanplatten wird den Tanninen i.d.R. Formaldehyd als Vernetzer zugegeben. Durch die Reaktion der Tannine mit dem Formaldehyd gehen die Tannine von dem löslichen Zustand in den unlöslichen Zustand über, so daß die eigentlichen Bindemittel die Tannin-Formaldehydharze sind.

Die Idee, Klebstoffe auf Basis von Tannin-Formaldehydharzen zu entwickeln, liegt mehr als 30 Jahre zurück (Dalton 1950, 1953, Narayanamurti 1957, 1959 und Plomley et al. 1957, 1964). Die zitierten Arbeiten bildeten die Grundlagen für die Verwendung von Tanninformaldehydharzen als Bindemittel in Holzwerkstoffen. Danach können Extraktstoffe bestimmter Rinden und Hölzer mit Formaldehyd kondensiert werden. Die sich nach der Kondensation bildenden Tanninformaldehyd-Polymerisate können für die Herstellung von Holzwerkstoffen als Bindemittel eingesetzt werden. Basierend hierauf konnten einzelne Betriebe an verschiedenen Stellen der Welt Sperrholz und Spanplatten produzieren, die Tanninformaldehydharze im Bindemittelsystem enthalten. Inzwischen ist auch bekannt geworden, die Tannine mit bestimmten Ligninsulfonaten bzw. Sulfitablaugen als Streckmittel zu kombinierren (DE-PS 3123999 A1). Auch die Kombination von Tannin mit Stärke ist bekannt.

Der Einsatz von Tanninformaldehydharzen als Bindemittel in Holzspanplatten setzte zögernd ein, da die mit dem Einsatz der Tanninformaldehydharze verbundenen Probleme bis jetzt weitgehend ungelöst blieben. Hierzu gehören die hohe Viskosität der Harze im technischen Konsistenzbereich (40-60 % Stoffdichte), die relativ kurze Tropfzeit infolge der hohen Reaktivität und die Neigung der Tanninformaldehydharze, bereits vor dem Pressen in technischen Anlagen vorzuhärten. Diese Nachteile zum einen und die in der Vergangenheit nahezu unbegrenzte Verfügbarkeit von wohlfeilen Bindemitteln auf Erdölbasis zum anderen haben die Weiterentwicklung dieser Harzsysteme erheblich verzögert. Erst die Verknappung und Verteuerung der Bindemittel auf Erdölbasis in den siebziger Jahren hat das Interesse an den Tanninen bzw. Tanninformaldehydharzen geweckt, da es sich hier um aus nachwachsenden Rohstoffen gewonnene Stoffe handelt.

Die Tannine können bei Raumtemperaturen mit dem Formaldehyd reagieren und Tanninformaldehydharze bilden. Es hat sich herausgestellt, daß die Tanninformaldehydharze im technisch relevanten Konsistenzbereich (40...60 %) eine sehr hohe Viskosität aufweisen, die ihre Verarbeitung in den üblichen Beleimungsanlagen problematisch macht. Ferner ist eine gleichmäßige Verteilung des Bindemittels beim Versprühen von Leimflotten höherer Viskositäten nicht immer gewährleistet. Die Ursache für die hohe Viskosität ist die Reaktion zwischen Tannin und Formaldehyd.

Das Ziel der vorliegenden Erfindung war es daher, ein Verfahren für die Bindung von Holzspänen bzw. Holzfasern zu entwickeln, das die obengenannten Nachteile vermeidet, ohne die Klebefähigkeit der Tannine bzw. der Tanninformaldehydharze zu beeinträchtigen. Darüber hinaus war es ferner das Ziel, keine Nachteile in Kauf zu nehmen, wie z.B. eine Verschlechterung der mechanischen Eigenschaften der mit dem Tannin bzw. den Tanninformalehydharzen hergestellten Holzwerkstoffe.

Es hat sich überraschenderweise herausgestellt, daß diese Aufgabe dadurch gelöst werden kann, indem man für die Herstellung von Spanplatten nicht wie üblich Späne bzw. Fasern aus frischem, unbehandeltem Holz einsetzt, sondern Zerkleinerungsprodukte, sprich Holzspäne bzw. Fasern aus alten formaldehydhaltigen, insbesondere von aminoplastgebundenen Faser- und Spanplatten als Rohmaterial können z.B. bei Spanplatten aus Altmöbel eingesetzt werden, die entsorgt werden müssen.

Das vorgeschlagene Verfahren kombiniert insofern in sinnvoller Weise die Verwendung von Altspanplatten mit der Nutzung des darin enthaltenen Bindemittels bzw. des Formaldehyds. Durch die während des Pressens herrschende hohe Temperatur und Feuchte wird der Formaldehyd aus dem Aminoplastharz durch Hydroylse freigesetzt und das Tannin vernetzt. Dadurch werden die Probleme, die mit der Vorhärtung der Tannine bzw. mit der erheblichen Erhöhung ihrer Viskosität verbunden sind, vermieden und die alten Spanplatten bzw. Faserplatten gleichzeitig einer sinnvollen Nutzung zugeführt.

Das Verfahren hat ferner den Vorteil, daß die mit dem Tannin versehenen Späne oder Fasern über längere Zeit vor dem Pressen bei Raumtemperatur gelagert werden, ohne daß die Gefahr der Vorhärtung eintritt, da die Hydrolyse des in den alten Platten vorhandenen Harzes aus dem der Formaldehyd für die Vernetzung des Tannins entstammt, hauptsächlich während des Pressens stattfindet. Um die Preßzeit zu verkürzen, können die Späne sogar vor, während und nach dem Beleimen mit dem Tannin erwärmt werden. Selbstverständlich können die mit dem Tannin versehenen Späne aus alten Span- und/oder Faserplatten auch mit beleimten Spänen bzw. Fasern aus frischem, unbehandeltem Holz zusammengemischt werden, die mit herkömmlichen Bindemitteln behandelt wurden.

### Das folgende Beispiel soll die Erfindung verdeutlichen, ohne sie einzuschränken!

Eine industriell hergestellte Holzspanplatte, die ein Harnstofformaldehydharz als Bindemittel enthält, wurde mit Hilfe einer Schlagkreuzmühle zerkleinert und daraus Holzspäne bzw. Holzzerkleinerungsprodukte gewonnen. Die hergestellten Späne wurden anschließend mit einem Extrakt aus Quebrachoholz, das hauptsächlich Tannin (Gerbstoffe) enthält, in Mengen von 10 % (Feststoff/atro Späne) mit einer 40 prozentigen Tanninlösung beleimt und anschließend zu Spanplatten verpreßt. Die Preßzeit betrug für eine 19 mm dicke Spanplatte mit einer Rohdichte von 0,7 g/cm³ etwa 10 Minuten. Nach einer Lagerungszeit von 2 Wochen wurde die Platte auf ihre mechanisch-technologischen Eigenschaften geprüft. Die Ergebnisse sind in nachfolgender Tabelle zusammengefaßt:

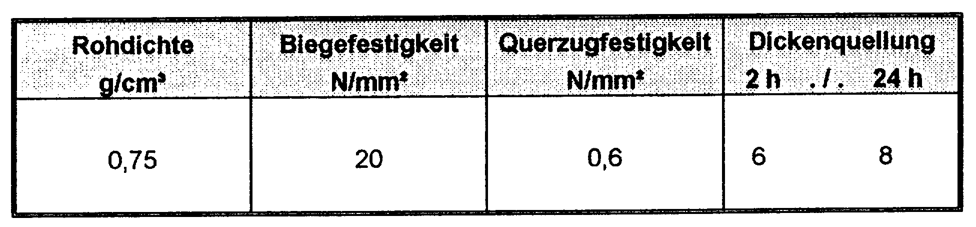

Daraus läßt sich entnehmen, daß das als Bindemittel zugeführte Tannin kein Formaldehyd außer desjenigen zum Härten braucht, das ursprünglich in den Spänen vorhanden war. Selbstverständlich funktioniert das Verfahren auch, wenn man den Tanninen auch geringe Mengen an Formaldehyd beigibt, die ihre Reaktivität erhöhen. Damit wird die Preßzeit verkürzt.

## Patentansprüche

1. Verfahren zur Herstellung von tanningebundenen Span- und Faserplatten aus bereits hergestellten alten Span- und Faserplatten,dadurch gekennzeichnet, daß der für die Vernetzung des Tannins notwendige Formaldehyd dem hydrolytischen Abbau des in den alten Span- oder Faserplatten vorhandenen Bindemittels entstammt und die Vernetzung während des Preßvorganges erfolgt.

2. Verfahren nach Anspruch 1 dadurch gekennzeichnet, daß die mit Tannin beleimten Späne bzw. Fasern aus alten Span- bzw. Faserplatten nur in den Deckschichten von mehrschichtigen Span- bzw. Faserplatten eingesetzt werden.

3. Verfahren nach Anspruch 1 dadurch gekennzeichnet, daß die mit Tannin beleimten Späne aus alten Span- bzw. Faserplatten nur in die Mittelschicht von mehrschichtigen Platten eingebracht werden.

4. Verfahren nach Anspruch 1 bis 3 dadurch gekennzeichnet, daß das Tannin in heißem Zustand bei Temperaturen zwischen 100 und 120°C den Spänen bzw. Fasern zugegeben wird.

5. Verfahren nach Anspruch 1 dadurch gekennzeichnet, daß das Pressen der beleimten Späne bzw. Fasern nach dem Dampf-Injection-Verfahren durchgeführt wird.

6. Verfahren nach Anspruch 1 dadurch gekennzeichnet, daß das Tannin Sulfitablauge als Streckmittel enthält.

7. Verfahren nach Anspruch 1 dadurch gekennzeichnet, daß das Tannin Stärke als Streckmittel enthält.

8. Verfahren nach Anspruch 1 dadurch gekennzeichnet, daß das Tannin in Form einer Flüssigkeit mit einem Feststoffgehalt von 30 % den Spänen aus alten Spanplatten zugeführt wird.

9. Verfahren nach Anspruch 1 dadurch gekennzeichnet, daß das Tannin in Form einer Flüssigkeit mit einem Stoffgehalt von 60 % den Spänen aus alten Span- bzw. alten Faserplatten zugeführt wird.

10. Verfahren nach Anspruch 1 dadurch gekennzeichnet, daß das Tannin auf einem pH-Wert von 2-11 eingestellt, vorzugsweise zwischen 3 und 9 eingestellt wird.

11. Verfahren nach Anspruch 1 bis 10 dadurch gekennzeichnet, daß für die Einstellung des pH-Wertes organische Säuren wie Ameisensäure verwendet werden.

12. Verfahren nach Anspruch 1 bis 11 dadurch gekennzeichnet, daß die mit Tannin beleimten Späne bzw. Fasern über mehrere Stunden mit dem Tannin in beleimtem Zustand gelagert werden, ehe sie zu Span- bzw. zu Faserplatten verpreßt werden.

13. Verfahren nach Anspruch 1 bis 12 dadurch gekennzeichnet, daß die Späne bzw. die Fasern vor dem Beleimen mit Tannin mit Wasser behandelt werden.

## Claims

1. Method of manufacturing tannin-bonded chipboards and fibreboards from old chipboards and fibreboards which have already been manufactured, characterised in that the formaldehyde necessary for the cross-linking of the tannin is derived from the hydrolytic decomposition of the bonding agent present in the old chipboards and fibreboards and the crosslinking occurs during the pressing process.

2. Method as claimed in Claim 1, characterised in that the chips or fibres, which are coated with tannin, from old chipboards or fibreboards are used only in the cover layers of multi-layer chipboards or fibreboards.

3. Method as claimed in Claim 1, characterised in that the chips, which are coated with tannin, from old chipboards or fibreboards are introduced only into the middle layer of multi-layer boards.

4. Method as claimed in Claims 1 to 3, characterised in that the tannin is added to the chips or fibres in the hot state at temperatures between 100 and 120°C.

5. Method as claimed in Claim 1, characterised in that the pressing of the coated chips or fibres is performed in accordance with the steam-injection process.

6. Method as claimed in Claim 1, characterised in that the tannin includes sulphite waste liquor as an extender.

7. Method as claimed in Claim 1, characterised in that the tannin includes starch as an extender.

8. Method as claimed in Claim 1, characterised in that the tannin is added to the chips from old chipboards in the form of a liquid with a solid content of 30%.

9. Method as claimed in Claim 1, characterised in that the tannin is added to the chips from old chipboards or fibreboards in the form of a liquid with a material content of 60%.

10. Method as claimed in Claim 1, characterised in that the tannin is adjusted to a pH value of 2-11, preferably between 3 and 9.

11. Method as claimed in Claims 1 to 10, characterised in that organic acids, such as formic acid, are used for the adjustment of the pH value.

12. Method as claimed in Claims 1 to 11, characterised in that the chips or fibres coated with tannin are stored for a number of hours with the tannin in the coated state before they are pressed to form chipboards or fibreboards.

13. Method as claimed in Claims 1 to 12, characterised in that the chips or fibres are treated with water before being coated with tannin.

## Revendications

1. Procédé pour produire des panneaux de particules ou de fibres liés par des tanins, à partir d'anciens panneaux de particules ou de fibres déjà produits, caractérisé en ce que le formaldéhyde nécessaire à la réticulation du tanin provient de la décomposition par hydrolyse du liant présent dans les anciens panneaux de particules ou de fibres de bois et la réticulation a lieu pendant le processus de pressage.

2. Procédé selon la revendication 1, caractérisé en ce que les copeaux ou fibres encollés de tanin provenant d'anciens panneaux de particules ou de fibres ne sont mis en oeuvre que dans les couches de recouvrement de panneaux de particules ou de fibres multicouches.

3. Procédé selon la revendication 1, caractérisé en ce que les copeaux ou fibres encollés de tanin provenant d'anciens panneaux de particules ou de fibres ne sont mis en oeuvre que dans la couche centrale de panneaux multicouches.

4. Procédé selon les revendications 1 à 3, caractérisé en ce que le tanin est ajouté aux copeaux ou fibres à l'état chaud à des températures comprises entre 100 et 120°C.

5. Procédé selon la revendication 1, caractérisé en ce que le pressage des copeaux ou fibres encollés est réalisé selon le procédé à injection de vapeur.

6. Procédé selon la revendication 1, caractérisé en ce que le tanin contient une lessive de sulfite épuisée comme diluant.

7. Procédé selon la revendication 1, caractérisé en ce que le tanin contient l'amidon comme diluant.

8. Procédé selon la revendication 1, caractérisé en ce que le tanin est ajouté sous forme d'un liquide ayant une teneur en solides de 30%, aux copeaux provenant d'anciens panneaux de particules.

9. Procédé selon la revendication 1, caractérisé en ce que le tanin est ajouté sous forme d'un liquide ayant une teneur en solides de 60%, aux copeaux provenant d'anciens panneaux de particules ou de fibres.

10. Procédé selon la revendication 1, caractérisé en ce que le tanin est ajusté à une valeur de pH de 2 à 11, de préférence comprise entre 3 et 9.

11. Procédé selon les revendications 1 à 10, caractérisé en ce que des acides organiques comme l'acide formique sont utilisés pour ajuster la valeur du pH.

12. Procédé selon les revendications 1 à 11, caractérisé en ce que les copeaux ou fibres encollés de tanin sont entreposés pendant plusieurs heures avec le tanin à l'état encollé avant qu'ils soient pressés en panneaux de particules ou en panneaux de fibres.

13. Procédé selon les revendications 1 à 12, caractérisé en ce que les copeaux ou les fibres sont traités avec de l'eau avant l'encollage avec le tanin.
